# EUROPEAN PATENT APPLICATION

(11) **EP 4 644 192 A1**
(43) Date of publication of application: **05.11.2025**
(21) Application number: 25165240.0
(22) Date of filing: 21.03.2025
(51) Int. Cl.: B60S 1/40

(54) **ASSEMBLY STRUCTURE OF WIPER DRIVING ARM AND ACCESSORY PIECE**

(30) Priority: 29.04.2024 CN 202410529272
(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patentanwälte Blasberg Kewitz & Reichel

(57) **Abstract**

This disclosure is an assembly structure of a windshield wiper. An accessory piece (10) includes a main body (11) and a head portion (12). A stepped surface (13) is defined between the head portion (12) and the main body (11). The stepped surface (13) includes a front latching segment (131) and two arc segments (132). The main body (11) includes an elastic arm (111) and a latching block (112) located on the top thereof. The latching block (112) includes a stepped portion (113). A wiper driving arm (20) includes an arm body (21) and a cover (22). The cover (22) includes a top surface (221) and two side walls (222). The top surface (221) abuts against the front latching segment (131), and the two side walls (222) abut against the two arc segments (132) respectively. The latching block (112) is embedded in the limiting slot (23) on the top surface (221). One side of the limiting slot (23) is located in the stepped portion (113) and the latching block (112) is non-protruding from the top surface (221).

## Description

### BACKGROUND OF THE DISCLOSURE

### Technical Field

The technical field relates to a windshield wiper, and more particularly relates to an assembly structure of a wiper driving arm and an accessory piece.

### Description of Related Art

The assembly structure of a windshield wiper is designed to secure the wiper driving arm on the accessory seat, and metal springs and a rubber strip are attached to the bottom of the accessory seat. Furthermore, the wiper driving arm drives the accessory seat and applies pressure to the metal springs and the rubber strip to clean the windshield.

Furthermore, the wiper driving arm and the accessory seat are assembled through an accessory piece. The combination structure of the wiper driving arm and the accessory piece includes disposing a slot on the top of the wiper driving arm. Additionally, a resilience button is disposed correspondingly on the top of the accessory piece. Therefore, the wiper driving arm and the accessory piece are connected through the resilience button engaged in the slot. However, since the resilience button protrudes from the surface of the wiper driving arm, it is easy to accidentally contact, and that makes the resilience button to disengage from the slot. As a result, this inconvenience during use needs to be improved.

In view of the above drawbacks, the inventor proposes this disclosure based on his expert knowledge and elaborate researches in order to solve the problems of related art.

### SUMMARY OF THE DISCLOSURE

One object of this disclosure is to provide an assembly structure of a driving arm and an accessory piece to ensure the secure combination between the wiper driving arm and the accessory piece to avoid loosening.

This disclosure is an assembly structure includes a wiper driving arm and an accessory piece. The accessory piece includes a main body and a head portion connected to the main body. A stepped surface is disposed between the head portion and the main body. The stepped surface includes a front latching segment and two arc segments connected to the front latching segment. The main body includes an elastic arm and a latching block disposed on the top thereof. The latching block is located on one end of the elastic arm and includes a stepped portion. The wiper driving arm includes an arm body and a cover connected to the arm body. The cover includes a top surface and two side walls connected to the top surface. One side of the top surface abuts against the front latching segment, and the two side walls abut against the two arc segments respectively. A limiting slot is defined on the top surface, and the latching block is embedded in the limiting slot. One side of the limiting slot is located in the stepped portion and the latching block is non-protruding from the top surface.

In one embodiment of this disclosure, assembly structure further includes an accessory seat, wherein the accessory seat includes a base and a pivot disposed on the base, an axis hole is defined on the main body, and the accessory seat and the accessory piece are combined through the pivot being engaged in the axis hole.

In one embodiment of this disclosure, a groove is defined on the outer periphery of the elastic arm and the latching block of the accessory piece.

In one embodiment of this disclosure, the stepped portion includes a step height, the limiting slot includes a wall thickness, and the dimension of the step height is greater than or equal to that of the wall thickness.

In one embodiment of this disclosure, a guiding slope is disposed on the top of the latching block, and the guiding slope is extended from the top of the stepped portion to the elastic arm.

In one embodiment of this disclosure, the accessory piece includes a blocking rib extending from each arc segment to the lateral side of the main body, the cover includes a receiving slot penetrating the main body, a protruding leg is extended from each side wall toward the receiving slot, a front end of a bottom of the cover abuts against the blocking rib, and the protruding leg abuts against one side of the blocking rib.

In comparison with the related art, the accessory piece of this disclosure includes a stepped surface defined between the head portion and the main body, and the stepped surface includes a front latching segment and two arc segments connected to the front latching segment. Additionally, the main body includes an elastic arm and a latching block disposed on the top thereof, and the latching block is located on one end of the elastic arm and includes a stepped portion. Furthermore, the top surface of the cover of the wiper driving arm abuts against the front latching segment, and two side walls of the cover abut against the two arc segments respectively. Moreover, a limiting slot is defined on the top surface of the cover, and the latching block is embedded in the limiting slot. Thus, one side of the limiting slot is located in the stepped portion and the latching block is non-protruding from the top surface of the cover. This prevents foreign objects from accidentally contacting the latching block, which may cause the latching block to loosen from the limiting slot and ensures the connection between the wiper driving arm and the accessory piece.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 depicts a schematic view of the wiper driving arm and the accessory piece assembled to the accessory seat in this disclosure.
FIG. 2 depicts a perspective exploded schematic view of the assembly structure of the wiper driving arm and the accessory piece in this disclosure.
FIG. 3 depicts a top view of the wiper driving arm combined with the accessory piece in this disclosure.
FIG. 4 depicts a cross-sectional view of line 4-4 in FIG. 3.
FIG. 5 depicts a cross-sectional view of line 5-5 in FIG. 3.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

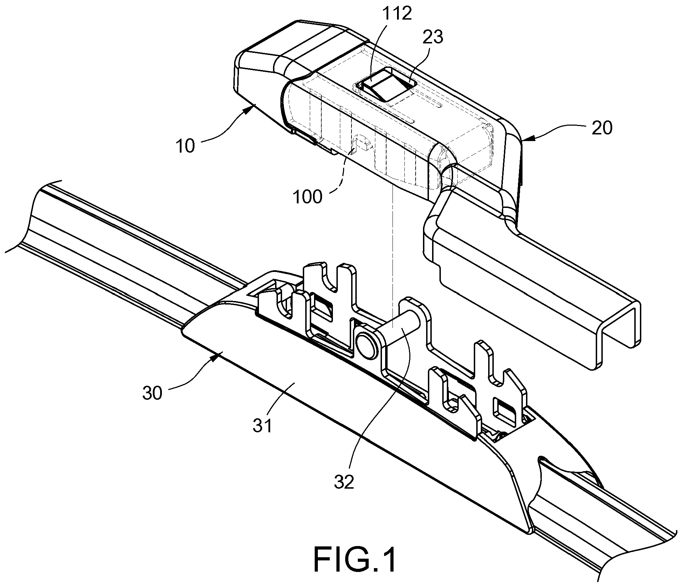

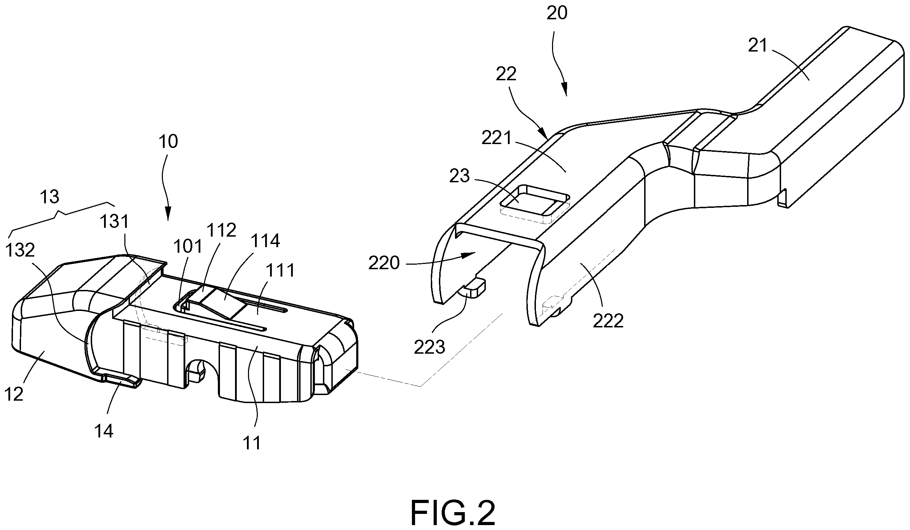

Please refer to FIG.1 and FIG. 2, which depict a schematic view of the wiper driving arm and the accessory piece assembled to the accessory seat in this disclosure and a perspective exploded schematic view of the assembly structure of the wiper driving arm and the accessory piece in this disclosure. An assembly structure 1 of this disclosure includes an accessory piece 10, a wiper driving arm 20 and an accessory seat 30. The wiper driving arm 20 and the accessory piece 10 are engaged with each other, and the accessory piece 10 is coupled to the accessory seat 30 to complete the assembly.

In this embodiment, the accessory seat 30 includes a base 31 and a pivot 32 disposed on the base 31. Additionally, an axis hole 100 is defined on the accessory piece 10. The accessory seat 30 and the accessory piece 10 are combined through the pivot 32 being engaged in the axis hole 100.

The accessory piece 10 includes a main body 11 and a head portion 12 connected to the main body 11. A stepped surface 13 is defined between the head portion 12 and the main body 11. The stepped surface 13 includes a front latching segment 131 and two arc segments 132 connected to the front latching segment 131. Moreover, the main body 11 includes an elastic arm 111 and a latching block 112 disposed on the top thereof. The latching block 112 is located on one end of the elastic arm 111 and includes a stepped portion 113. Additionally, a guiding slope 114 is disposed on the top of the latching block 112. The guiding slope 114 is extended from the top of the stepped portion 113 to the lateral side of the elastic arm 111. The accessory piece 10 includes a blocking rib 14 extending from each arc segment 132 to the lateral side of the main body 11.

Furthermore, the wiper driving arm 20 includes an arm body 21 and a cover 22 connected to the arm body 21. The cover 22 includes a top surface 221 and two side walls 222 connected to the top surface 221. A limiting slot 23 is defined on the top surface 221. The latching block 112 is embedded in the limiting slot 23, and one side of the limiting slot 23 is located in the stepped portion 113. Additionally, the cover 22 includes a receiving slot 220. A protruding leg 223 is extended from each side wall 22 toward the receiving slot 220.

Specifically, a groove 101 is defined on the outer periphery of the elastic arm 111 and the latching block 112 of the accessory piece 10. Accordingly, the elastic arm 111 and the latching block 112 are moveable in the groove 101. The latching block 112 is located on the free end of the elastic arm 111 to have a larger displacement.

It should be noted that when the wiper driving arm 20 is mounted on the accessory piece 10, the main body 11 of the accessory piece 10 is inserted in the receiving slot 220 of the cover 22. Additionally, the latching block 112 is locked in the limiting slot 23. It is worth noticing that one side of the top surface 221 abuts against the front latching segment 131 of the stepped surface 13, and the two side walls 222 abuts against the two arc segments 132 respectively. Thus, the cover 22 is positioned on the main body 11 of the accessory piece 10.

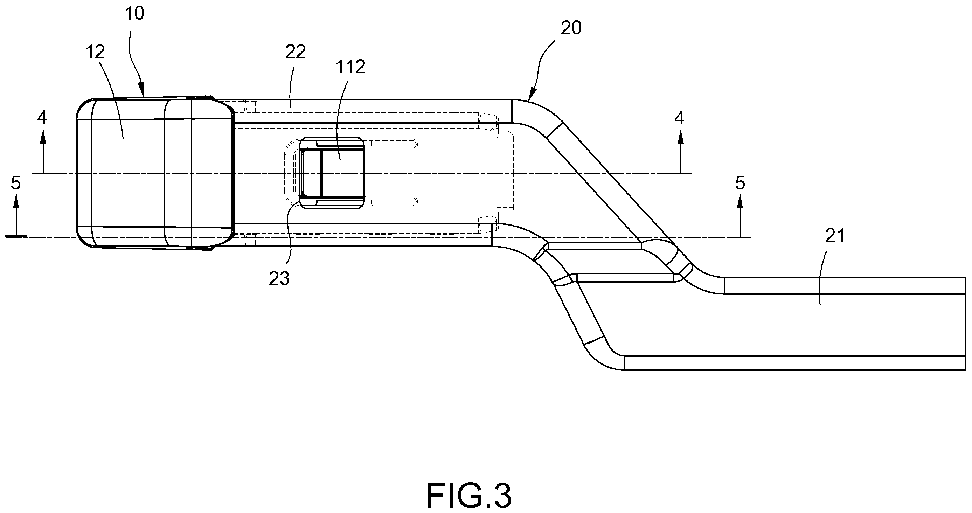

Please further refer to FIG. 3 to FIG. 5, which depict a top view of the wiper driving arm combined with the accessory piece in this disclosure and two cross-sectional views of the assembly structure in this disclosure. As shown in FIG. 3, the wiper driving arm 20 is combined with the accessory piece 10 through the latching block 112 being engaged in the limiting slot 23 and the cover 22 being positioned on one side of the head portion 12.

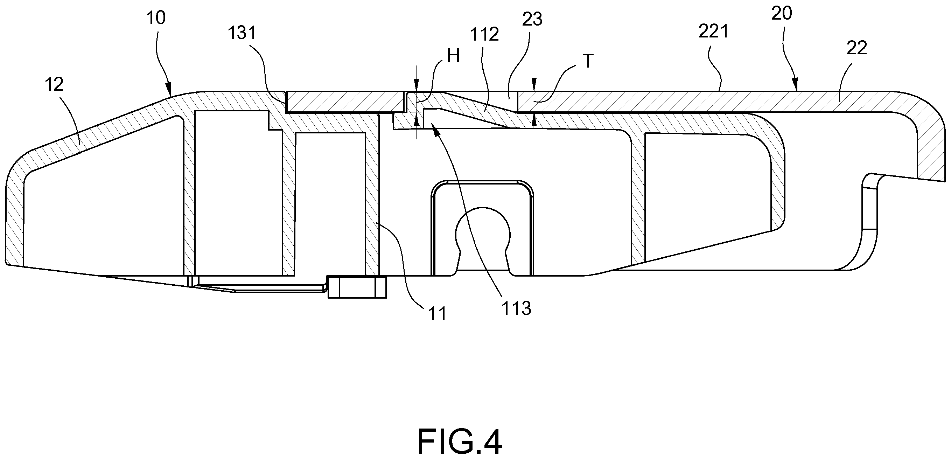

Please refer to FIG. 4, the latching block 112 in this disclosure includes the stepped portion 113, and the stepped portion 113 includes a step height H. Furthermore, the limiting slot 23 includes a wall thickness T. The dimension of the step height H is greater than or equal to that of the wall thickness T. Accordingly, when the top surface 221 of the cover 22 abuts against the front latching segment 131 of the accessory piece 10, the latching block 112 is located in the limiting slot 23 and the latching block 112 is non-protruding from the top surface 221 of the cover 22. In this embodiment, the top surface of the latching block 112 is flush with the top surface 221 of the cover 22; that is, the dimension of the step height H equals the dimension of the wall thickness T. In some embodiments, the top surface of the latching block 112 is lower than the top surface 221 of the cover 22; that is, the dimension of the step height H is greater than the dimension of the wall thickness T.

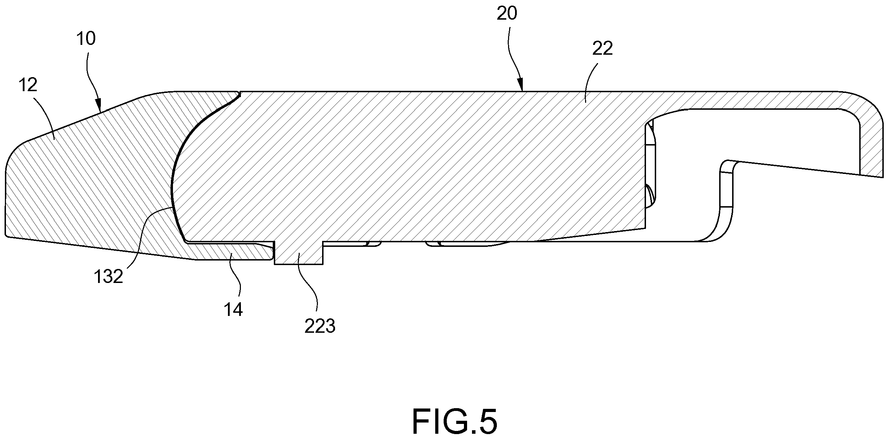

As shown in FIG. 5, the accessory piece 10 in this disclosure includes the blocking rib 14 extending from each arc segment 132. Additionally, the protruding leg 223 extends from the side wall 222 of the cover 22. When the cover 22 is positioned on one side of the head portion 12, the front end of the bottom of the cover 22 abuts against the blocking rib 14, and the protruding leg 223 abuts against on one side of the blocking rib 14. Thereby, the cover 22 is prevented from excessively pushing against the head portion 12, and that ensures the wiper driving arm 20 is firmly positioned on the accessory piece 10.

## Claims

1. An assembly structure, comprising:
an accessory piece (10), comprising a main body (11) and a head portion (12) connected to the main body (11), a stepped surface (13) disposed between the head portion (12) and the main body (11), the stepped surface (13) comprising a front latching segment (131) and two arc segments (132) connected to the front latching segment (131), the main body (11) comprising an elastic arm (111) and a latching block (112) disposed on a top thereof, and the latching block (112) located on one end of the elastic arm (111) and comprising a stepped portion (113); and
a wiper driving arm (20), comprising an arm body (21) and a cover (22) connected to the arm body (21), the cover (22) comprising a top surface (221) and two side walls (222) connected to the top surface (221), one side of the top surface (221) abutting against the front latching segment (131), and the two side walls (222) abutting against the two arc segments (132) respectively, a limiting slot (23) defined on the top surface (221), and the latching block (112) embedded in the limiting slot (23), wherein one side of the limiting slot (23) is located in the stepped portion (113) and the latching block (112) is non-protruding from the top surface (221).

2. The assembly structure according to claim 1, further comprising an accessory seat (30), wherein the accessory seat (30) comprises a base (31) and a pivot (32) disposed on the base (31), an axis hole (100) is defined on the main body (11), and the accessory seat (30) and the accessory piece (10) are combined through the pivot (32) being engaged in the axis hole (100).

3. The assembly structure according to claim 1, wherein a groove (101) is defined on an outer periphery of the elastic arm (111) and the latching block (112) of the accessory piece (10).

4. The assembly structure according to claim 1, wherein the stepped portion (113) comprises a step height (H), the limiting slot (23) comprises a wall thickness (T), and a dimension of the step height (H) is greater than or equal to that of the wall thickness (T).

5. The assembly structure according to claim 1, wherein a guiding slope (114) is disposed on a top of the latching block (112), and the guiding slope (114) is extended from a top of the stepped portion (113) to the elastic arm (111).

6. The assembly structure according to claim 1, wherein the accessory piece (10) comprises a blocking rib (14) extending from each arc segment (132) to a lateral side of the main body (11), the cover (22) comprises a receiving slot (220) penetrating the main body (11), a protruding leg (223) is extended from each side wall (222) toward the receiving slot (220), a front end of a bottom of the cover (22) abuts against the blocking rib (14), and the protruding leg (223) abuts against one side of the blocking rib (14).
